# EUROPÄISCHE PATENTSCHRIFT

(11) **EP 2 338 640 B1**
(45) Veröffentlichungstag und Bekanntmachung des Hinweises auf die Patenterteilung: **23.05.2012**
(21) Anmeldenummer: 11002786.9
(22) Anmeldetag: 30.03.2006
(51) Int. Cl.: B24B 13/06, B24B 41/00, B24B 47/22, B24B 47/20, B24B 13/04, B23Q 1/60

(54) **Maschine zur Bearbeitung von optischen Werkstücken, insbesondere von Kunststoff-Brillengläsern**
Machine for grinding optical workpieces, in particular plastic eyeglass lenses
Machine de meulage de pièces optiques, en particuliere de verres à lunettes en plastique

(30) Priorität: 06.05.2005 DE 102005021640
(43) Veröffentlichungstag der Anmeldung: 29.06.2011
(62) Teilanmeldung aus: 06006637.0
(73) Patentinhaber: Satisloh GmbH, 35578 Wetzlar (DE)
(72) Erfinder: Savoie, Marc, 35578 Wetzlar (DE); McPherson, Edward, 35614 Asslar (DE)
(74) Vertreter: Oppermann, Mark

(56) Entgegenhaltungen:
- EP-A- 0 213 361
- WO-A-02/06005
- DE-A1- 3 600 231

## Beschreibung

### TECHNISCHES GEBIET

Die vorliegende Erfindung bezieht sich auf eine Maschine zur Bearbeitung von optischen Werkstücken, insbesondere von Kunst stoff-Brillengläsern, gemäß dem Oberbegriff des Patentanspruchs 1.

### STAND DER TECHNIK

Üblicherweise liegt bei der Bearbeitung von Kunststoff-Brillengläsern ein aus Kunststoff spritzgegossener Brillenglasrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (Gleitsichtflächen), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück einen Fräs-oder Drehbearbeitungsprozeß zur Herstellung der optisch aktiven Form vor, in der Regel gefolgt von einem Feinschleif- oder Polierprozeß zur Erzielung der notwendigen Oberflächengüte.

Für den oben erwähnten Drehbearbeitungsprozeß werden im Stand der Technik auch sogenannte Fast-Tool-Drehmaschinen eingesetzt, bei denen ein Drehmeißel entweder linear reziprozierend (siehe z.B. die gattungsbildende WO 02/06005 A1) oder relativ (vergl. beispielsweise die WO 99/33611 Al) hochdynamisch bewegt werden kann, so daß nicht-rotationssymmetrische Linsenflächen im Dreh-verfahren erzeugt werden können. Dabei muß der Drehmeißel, ins-besondere bei der Erzeugung hochgenauer optischer Flächen, mit dem Arbeitspunkt seiner Schneidkante hochgenau auf die Rotationsachse der Werkstückspindel ausgerichtet werden, damit im Zentrum der bearbeiteten Linsenfläche keine vorstehende nichtbearbeitete Zone verbleibt. Nach dem Stand der Technik ist daher für den Drehmeißel eine sehr genaue Höheneinstellbarkeit mittels spezieller Stellachsen erforderlich.

Hierfür werden häufig Festkörpergelenke benutzt, welche den Drehmeißel oder auch die vollständige Fast-Tool-Einheit tragen können. Durch manuelle Verstellung einer Feingewindeschraube wird dabei das gesamte Festkörpergelenk auf der gegenüberliegenden Seite des Drehmeißels deformiert, wodurch es zu einer sehr feinfühligen Höhenverlagerung der Schneidkante des Drehmeißels kommt. Eine Abbildung eines solchen Stellmechanismus und eine Beschreibung seiner Funktion ist beispielsweise aus dem Maschinenhandbuch *"*Precitech Nanoform® 200 / Nanoform® 350' der Precitech Inc., Keene, New Hampshire, USA, Seiten 14 und 15, ersichtlich.

Darüber hinaus sind Werkzeughalter und Revolverköpfe handelsüblich, die über entsprechende Höhenjustagemöglichkeiten für Drehmeißel verfügen. Insbesondere sind austauschbare Werkzeughalter bekannt, die entsprechende mechanische Höheneinstellungsmechanismen besitzen (siehe z.B. die Druckschriften US 5,245,896 und DE 42 27 268 A1).

Die Höhenausrichtung wird üblicherweise in Werkzeugvoreinstellgeräten außerhalb der Maschine vorgenommen, wobei der gesamte Drehmeißelhalter in einer Vorrichtung mittels eines Kreuztisches an ein Justierstück, welches die Lage der Hauptspindeldrehachse repräsentiert, herangefahren wird. Mittels eines Profilprojektors wird die Höhe und Lage der Drehmeißelschneide erfaßt und zu dem Justierstück in Relation gebracht.

Die bekannten Mechanismen verwenden jedoch sämtlich eine manuelle Einstellung. Um eine automatische Verstellung auch während des Betriebs der Bearbeitungsmaschine zu ermöglichen, müßte eine zugeordnete CNC-gesteuerte Stellachse vorgesehen werden, was einen erheblichen Aufwand mit sich bringen würde.

Ausgehend vom Stand der Technik nach der WO 02/06005 A1 liegt der Erfindung die Aufgabe zugrunde eine Maschine zur Bearbeitung von optischen Werkstücken, insbesondere von Kunststoff-Brillengläsern mit einer Fast-Tool-Anordnung bereitzustellen, bei welcher der Arbeitspunkt der Schneidkante des Drehmeißels auf möglichst einfache Weise hochgenau auf die Rotationsachse der Werkstückspindel ausgerichtet werden kann.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 5.

### DARSTELLUNG DER ERFINDUNG

Erfindungsgemäß ist bei einer Maschine zur Bearbeitung von optischen Werkstücken, insbesondere von Kunststoff-Brillengläsern, die eine Werkstückspindel, mittels der das Werkstück um eine Werkstück-Drehachse drehend antreibbar ist, und eine Fast-Tool-Anordnung aufweist, mittels der ein Dremeißel in einer Fast-Tool-Bewegungsebene bewegbar ist, wobei die Werkstückspindel und die Fast-Tool-Anordnung zudem in einer Ebene, welche die Werkstück-Drehachse enthält, relativ zueinander bewegbar sind, die Fast-Tool-Bewegungsebene bezüglich der die Werkstück-Drehachse enthaltenden Ebene um einen Anstellwinkel schräggestellt.

Durch die erfindungsgemäße Schrägstellung der Bewegungsebene des Fast-Tools derart, daß zwischen dieser Bewegungsebene und der die Werkstück-Drehachse enthaltenden Ebene, mithin der Werkstück-Drehachse der Werkstückspindel ein Winkel von vorbestimmter Größe vorhanden ist, läßt sich in Verbindung mit der ohnehin an der Maschine vorhandenen Zustellbewegung der Werkstückspindel in der die Werkstück-Drehachse enthaltenden Ebene, genauer in Richtung der Werkstückspindel eine hochgenaue Höheneinstellung der Drehmeißelschneide auf die Werkstück-Drehachse der Werkstückspindel erzielen, ohne daß dazu Höhenverlagerungen der Drehmeißelschneide bezüglich der Fast-Tool-Anordnung erfoderlich sind. Das Maß der Zustellbewegung der Werkstückspindel in Richtung ihrer Achse und damit der dadurch erzielte Höhenausgleich zwischen der Werkstück-Drehachse der Werkstückspindel und dem Arbeitspunkt der Drehmeißelschneide erfolgt nach Maßgabe der Sinusfunktion des vorbestimmten Winkels.

Im Ergebnis sind mechanische Stellsysteme, wie sie im Stand der Technik vorgesehen sind und die im Gegensatz zur vorliegenden Erfindung ohnehin keine automatische Höhenjustage der Drehmeißelschneide während der Bearbeitung ermöglichen, entbehrlich. Hierdurch reduziert sich im Vergleich zum Stand der Technik auch das Gewicht der mittels der Fast-Tool-Anordnung zu bewegenden Massen, nämlich um das Gewicht der im Stand der Technik zwischen dem Drehmeißel und dem Schlitten der Fast-Tool-Anordnung vorgesehenen mechanischen Stellelemente, so daß die Dynamik und Bandbreite der Fast-Tool-Anordnung nicht durch zu hohe bewegte Massen limitiert wird. Dies ermöglicht eine höhere Formtreue der mittels der Fast-Tool-Anordnung gedrehten Flächen und führt nicht zuletzt auch zu kürzeren Bearbeitungszeiten.

Mit der Erfindung wird ferner nicht nur eine komplette Verstellachse eingespart bzw. die Anzahl der notwendigen Bewegungsachsen auf ein Minimum beschränkt, sondern es ist darüber hinaus auch möglich, die Zustellbewegungen von Werkzeug (Fast-Tool-Anordnung) und Werkstück (Werkstückspindel) vorteilhaft aufzuteilen. So kann die Zustellbewegung der Werkstückspindel dazu verwendet werden, die rotationssymmetrischen Anteile einer Linse, d.h. also den sphärischen Anteil der Fläche zu erzeugen, während die nicht-rotationssymmetrischen Anteile der Linse, wie sie z.B. bei torischen Flächen, prismatischen Flächen, atorischen Flächen oder Freiformflächen vorhanden sind, über die Zustellbewegung der Fast-Tool-Anordnung erzeugt werden. Hierdurch können auch Fast-Tool-Anordnungen mit geringerem Hub und damit größerer Steifigkeit (infolge der kürzeren Hebel) verwendet werden, was wiederum der Qualität der erzeugten Flächen zuträlich ist.

Im Hinblick auf die Feinfühligkeit der Höheneinstellung der Drehmeißelschneide bezüglich der Werkstück-Drehachse ist es bevorzugt, wenn die Fast-Tool-Bewegungsebene und die die Werkstück-Drehachse enthaltende Ebene einen Anstellwinkel einschließen, der zwischen 2° und 10°, insbesondere 5° beträgt.

Wenngleich es insbesondere im Hinblick auf eine möglichst einfache Mathematik bei der Regelung der Bewegungsachsen bevorzugt ist, wenn der Drehmeißel mittels der Fast-Tool-Anordnung lagegeregelt in axialer Richtung zustellbar ist, kann der Grundgedanke der vorliegenden Erfindung, nämlich das winkelmäßige Anstellen der Fast-Tool-Bewegungsebene bezüglich der die Werkstück-Drehachse enthaltenden Ebene auch an einer Maschine mit einer rotativen Fast-Tool-Anordnung, wie sie etwa aus der WO 99/33611 A1 bekannt ist, realisiert werden. In diesem Fall steht die Fast-Tool-Bewegungsebene senkrecht zur Schwenkachse des rotativen Fast-Tools.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert. In den Zeichnungen zeigen:
- Fig. 1: eine perspektivische Ansicht einer erfindungsgemäßen Maschine zur Bearbeitung von optischen Werkstücken, namentlich Kunststoff-Brillengläsern, von schräg vorne/oben, die werkzeugmäßig mit einer Fräseinheit und zwei Fast-Tool-Anordnungen ausgestattet ist;
- Fig. 2: eine perspektivische Ansicht der Maschine gemäß Fig. 1 von schräg hinten/oben;
- Fig. 3: eine nach unten abgeschnittene Vorderansicht der Maschine gemäß Fig. 1;
- Fig. 4: eine nach unten abgeschnittene Vorderansicht der Maschine gemäß Fig. 1, die sich von der Darstellung in Fig. 3 dahingehend unterscheidet, daß eine Frässpindel der Fräseinheit teilweise abgeschnitten dargestellt ist, um den Blick auf die dahinter liegende Fast-Tool-Anordnung freizugeben;
- Fig. 5: eine Draufsicht auf die Maschine gemäß Fig. 1 mit Blickrichtung von oben in den Fig. 3 und 4; und
- Fig. 6: schematische Vorderansichten einer Werkstückspindel der Maschine gemäß Fig. 1, an der ein im Querschnitt dargestelltes Brillenglas montiert ist, welches mit tels eines Drehmeißels der Fast-Tool-Anordnung bearbeitet wird, wobei im oberen Teil von Fig. 6 eine fehlerhafte Höhenjustage des Drehmeißels bezüglich der Werkstück-Drehachse der Werkstückspindel veranschaulicht ist, während im unteren Teil von Fig. 6 eine korrekte Höhenjustage des Drehmeißels bezüglich der Werkstück-Drehachse gezeigt ist.

### DETAILLIERTE BESCHREIBUNG DES AUSFÜHRUNGSBEISPIELS

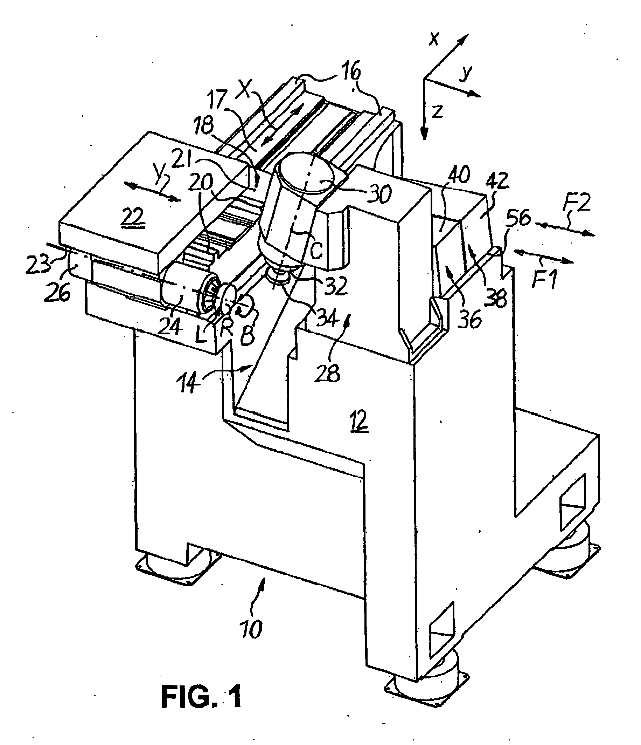

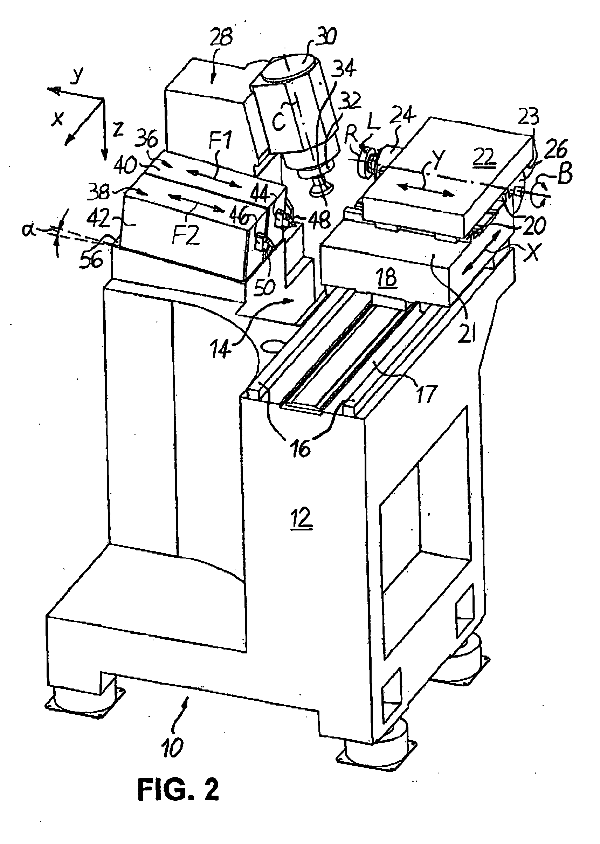

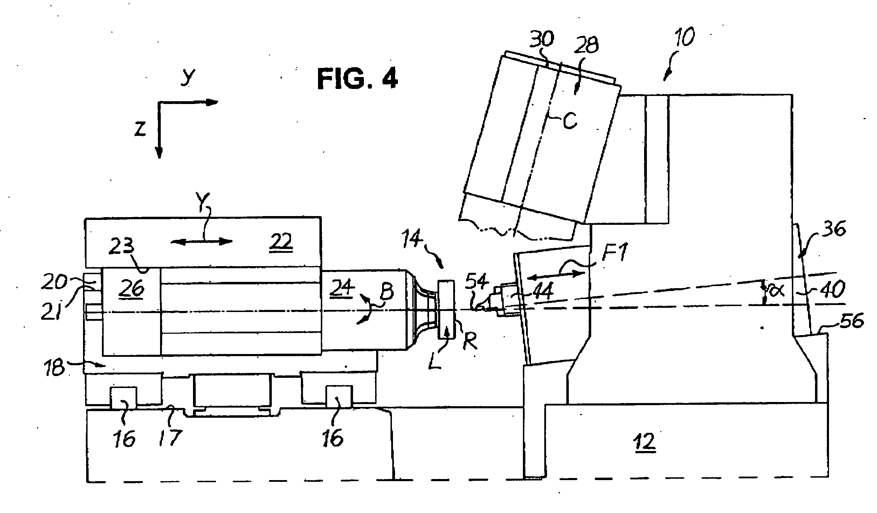

Die Fig. 1 bis 5 zeigen in schematischer Darstellung eine CNC-geregelte Maschine 10 insbesondere zur Flächenbearbeitung von Brillengläsern L aus Kunststoff in einem rechtwinkligen kartesischen Koordinatensystem, in dem die kleinen Buchstaben x, y bzw. z die Breitenrichtung (x), die Längenrichtung (y) und die Höhenrichtung (z) der Maschine 10 bezeichnen.

Gemäß den Fig. 1 bis 5 besitzt die Maschine 10 ein Maschinengestell 12, das einen Bearbeitungsbereich 14 begrenzt. Auf der in Fig. 1 linken Seite des Bearbeitungsbereichs 14 sind zwei Führungsschienen 16, die sich in der (horizontalen) Breitenrichtung x parallel zueinander erstrecken, auf einer in Fig. 1 obe-ren Montagefläche 17 des Maschinengestells 12 befestigt. Ein X-Schlitten 18, der durch zugeordnete CNC-Antriebs- und Steuerelemente (nicht gezeigt) in beiden Richtungen einer X-Achse CNC-lagegeregelt verstellbar ist, ist verschiebbar auf den Füh-rungsschienen 16 gelagert.

Zwei weitere Führungsschienen 20, die sich in der (gleichfalls horizontalen) Längsrichtung y parallel zueinander und senkrecht zu den Führungsschienen 16 erstrecken, sind auf einer in Fig. 1 oberen Montagefläche 21 des X-Schlittens 18 befestigt. In einer Kreuztischanordnung ist ein Y-Schlitten 22 verschiebbar auf den Führungsschienen 20 gelagert, der durch zugeordnete CNC-Antriebs- und Steuerelemente (ebenfalls nicht gezeigt) in beiden Richtungen einer Y-Achse CNC-lagegeregelt verstellbar ist.

An einer in den Fig. 1 bis 4 unteren Montagefläche 23 des Y-Schlittens 22 ist eine Werkstückspindel 24 befestigt, die mittels eines Elektromotors 26 in der Drehzahl und dem Drehwinkel CNC-geregelt um eine Werkstück-Drehachse B drehend antreibbar ist. Die Werkstück-Drehachse B ist mit der Y-Achse ausgefluchtet. An der Werkstückspindel 24, genauer deren in den Bearbeitungsbereich 14 hineinragenden Ende ist in an sich bekannter Weise das auf einem Blockstück aufgeblockte Brillenglas L für die Bearbeitung insbesondere der Rezeptfläche R des Brillenglases L derart angebracht, daß es gleichachsig mit der Werkstückspindel 24 drehen kann.

Aus der obigen Beschreibung ist soweit ersichtlich, daß die Werkstückspindel 24 mittels der Kreuztischanordnung (X-Schlitten 18, Y-Schlitten 22) CNC-lagegeregelt in einer X-Y-Ebene be-wegbar ist, welche die Werkstück-Drehachse B enthält und zu der die Montageflächen 17, 21 und 23 parallel sind, während das Brillenglas L in Drehzahl und Drehwinkel CNC-geregelt um die Werkstück-Drehachse B drehbar ist.

Auf der in Fig. 1 rechten Seite des Bearbeitungsbereichs 14 ist nun zunächst eine Fräseinheit 28 auf dem Maschinengestell 12 montiert, wie sie aus der EP 0 758 571 A1 der Anmelderin in Aufbau und Funktion grundsätzlich bekannt ist. Die Fräseinheit 28 weist eine mittels eines Elektromotors 30 um eine Fräser-Drehachse C drehzahlgeregelt antreibbare Frässpindel 32 auf, an deren in den Bearbeitungsbereich 14 hineinragenden Ende ein Fräswerkzeug 34 montiert ist.

Mittels der Fräseinheit 28 kann an dem Brillenglas L ein Fräsbearbeitungsvorgang ausgeführt werden, der - entsprechend der Lehre der EP 0 758 571 A1 - einen Einstech-Arbeitsgang umfaßt, bei dem das um die Fräser-Drehachse C drehzahlgeregelt rotierende Fräswerkzeug 34 und das drehwinkelgeregelt um die Werkstück-Drehachse B drehende Brillenglas L in wenigstens einer der beiden Achsrichtungen X und Y derart lagegeregelt relativ zueinander bewegt werden, daß die Schneiden des Fräswerkzeugs 34 mindestens im Bereich des Außenrands des Brillenglases L eine ringmuldenförmigen Ausnehmung erzeugen, bevor das Fräswerkzeug 34 in einem formgebenden Arbeitsgang entlang eines spiralförmigen Weges durch Regelung der Bewegungsbahn des Brillenglases L in den X- und Y-Achsen, d.h. in der X-Y-Ebene über das Brillenglas L von außen nach innen geführt wird, um weiteres Material abzutragen. Wahlfreie, wenn auch bevorzugt mitablaufende Arbeitsgänge bei diesem Fräsbearbeitungsvorgang sind die Randbearbeitung und das Facettieren des Brillenglases L. Bei der Randbearbeitung wird mittels des rotierenden Fräswerkzeugs 34 eine Bearbeitung des Brillenglasrohlings z.B. auf die durch die Brillengestellform vorgegebene Umfangskontur vorgenommen, während bei dem Facettieren die obere bzw. innere Umfangskante des Brillenglasrohlings mittels des rotierenden Fräswerkzeugs 34 abgeschrägt wird. Diese Verfahrensschritte sind dem Fachmann hinlänglich bekannt, so daß an dieser Stelle hierauf nicht weiter eingegangen werden soll.

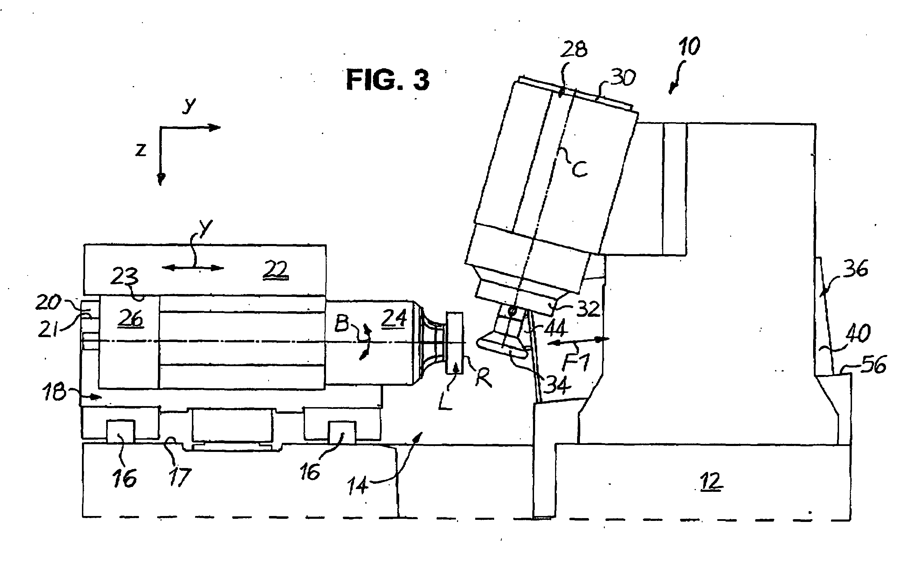

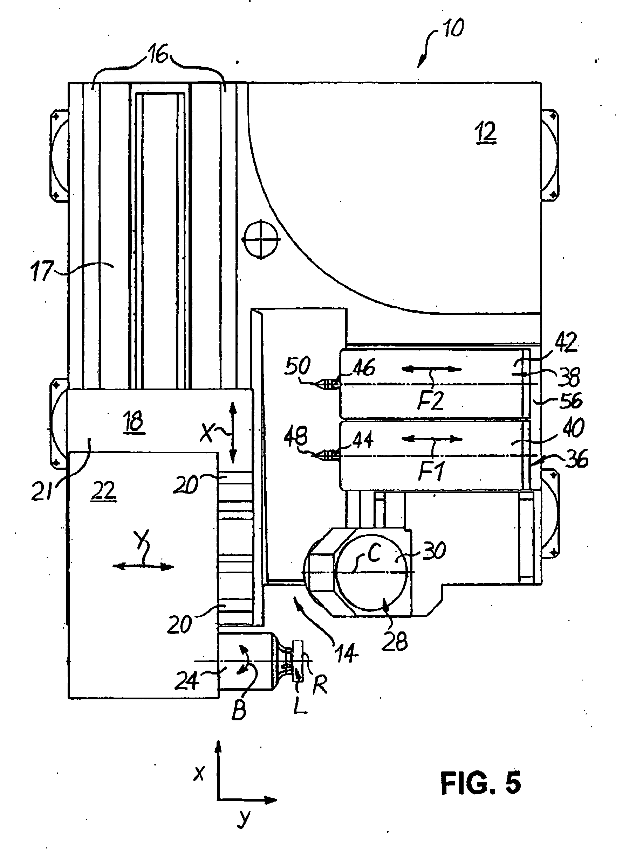

In den Fig. 1, 3 und 4 hinter der Fräseinheit 28 ist/sind wenigstens eine, im dargestellten Ausführungsbeispiel zwei Fast-Tool-Anordnungen 36, 38 in Parallelanordnung vorgesehen (mehr als zwei Fast-Tool-Anordnungen sind grundsätzlich ebenfalls denkbar). Wie etwa aus der WO 02/06005 A1 bekannt ist, weist jede Fast-Tool-Anordnung 36, 38 einen Aktuator 40, 42 und einen jeweils zugeordneten Schlitten 44, 46 (auch "shuttle" genannt) auf. Während der Schlitten 44 der ersten Fast-Tool-Anordnung 36 in beiden Richtungen einer Fast-Tool-Achse F1 ver-mittels des Aktuators 40 axial bewegbar ist, ist der Schlitten 46 der zweiten Fast-Tool-Anordnung 38 vermittels des Aktuators 42 in beiden Richtungen einer zur ersten Fast-Tool-Achse F1 parallelen zweiten Fast-Tool-Achse F2 axial bewegbar. Hierbei ist die Lage bzw. der Hub der Schlitten 44, 46 mittels CNC unabhängig voneinander regelbar. Wie die Fig. 5 zeigt, verlaufen die Fast-Tool-Achse F1, die Fast-Tool-Achse F2, die Y-Achse und die Werkstück-Drehachse B in der Draufsicht gesehen in derselben Richtung. In der Vorderansicht gemäß den Fig. 3, 4 und 6 gesehen weicht die Richtung der Y-Achse und der Werkstück-Dreh-achse B einerseits indes von der Richtung der Fast-Tool-Achse F1 und der Fast-Tool-Achse F2 andererseits ab, worauf nachfolgend noch näher eingegangen werden wird.

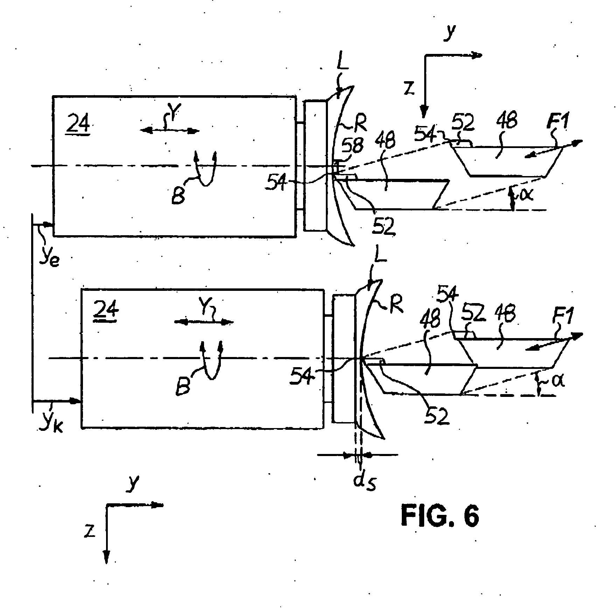

Im dargestellten Ausführungsbeispiel trägt jeder der Schlitten 44, 46 an seinem in den Bearbeitungsbereich 14 hineinragenden Ende einen Drehmeißel 48, 50, der am jeweiligen Schlitten 44, 46 auf hier nicht näher gezeigte Art und Weise vorzugsweise fest (im Gegensatz zu verstellbar) befestigt ist, so daß die Drehmeißel 48, 50 in einer Fast-Tool-Bewegungsebene (X-F1-Ebene bzw. X-F2-Ebene) bewegbar sind. Gemäß insbesondere Fig. 6 ist an dem Drehmeißel 48 ein Schneidplättchen 52 ggf. lösbar oder als Beschichtung angebracht, das eine Schneidkante 54 ausbildet und den jeweiligen Erfordernissen entsprechend, insbesondere spezifisch für den zu bearbeitenden Werkstoff, aus polykristal- Linem Diamant (PKD), CVD, Naturdiamant oder aber auch Hartmetall mit oder ohne Verschleißschutz-Beschichtung bestehen kann.

Mittels der Fast-Tool-Anordnung(en) 36 (und ggf. 38) kann die durch die Fräseinheit 28 vorbearbeitete Rezeptfläche R des Brillenglases L drehend nachbearbeitet werden, was wiederum unter Regelung der Bewegung des Brillenglases L in der X-Achse und ggf. der Y-Achse, d.h. in der X-Y-Ebene sowie unter Regelung der Bewegung des bearbeitenden Drehmeißels 48 (bzw. 50) in der F1-Achse (bzw. F2-Achse), d.h. in der X-F1-Ebene (bzw. X-F2-Ebene) erfolgt. Hierbei können die Fast-Tool-Anordnungen 36 und 38 derart angesteuert werden, daß sich der nicht an der Drehbearbeitung beteiligte Schlitten zu dem an der Drehbearbei- tung beteiligten Schlitten in Gegenrichtung bewegt, so daß die Schlitten quasi gegenläufig bzw. im Gegentakt schwingen, um durch Massenkompensation zu verhindern, daß störende Schwingun- gen in das Maschinengestell 12 übertragen werden bzw. diese zu verringern, wie es in der WO 02/06005 A1 offenbart wird. Im Er- gebnis sind bei der Drehbearbeitung Flächenqualitäten erzielbar, die fast der Flächenqualität entsprechen, die mit herkömlichen Polierverfahren erzielbar ist.

Eine Besonderheit der vorbeschriebenen Maschine 10 besteht darin, wie weiter oben schon allgemeiner angesprochen wurde, daß die Fast-Tool-Anordnungen 36 und 38 auf einer Montagefläche 56 des Maschinengestells 12 montiert sind, die bezüglich der Montageflächen 17, 21 bzw. 23 für die Kreuztischanordnung (X-Schlitten 18, Y-Schlitten 22) bzw. die Werkstückspindel 24 um einen Winkel α verkippt bzw. angestellt ist, so daß die Fast-Tool-Bewegungsebene (X-F1-Ebene bzw. X-F2-Ebene) bezüglich der die Werkstück-Drehachse B enthaltenden Bewegungsebene (X-Y-Ebene) der Werkstückspindel 24 schräggestellt ist. Dieser Winkel α beträgt im dargestellten Ausführungsbeispiel etwa 5°, kann aber auch etwas mehr oder etwas weniger betragen, beispielsweise im Bereich von 2° bis 10° liegen.

Durch diese Maßnahme hat eine Verstellung des Drehmeißels 48 mittels der Fast-Tool-Anordnung 36 in der F1-Achse bzw. eine Verstellung des Drehmeißels 50 mittels der Fast-Tool-Anordnung 38 in der F2-Achse zur Folge, daß die Bewegung der jeweiligen Schneidkante 54 zwei Bewegungskomponenten erhält, nämlich eine Bewegungskomponente in der Längsrichtung y der Maschine 10 und eine Bewegungskomponente in der Höhenrichtung z der Maschine 10. Letztere kann dafür genutzt werden, den Arbeitspunkt der Schneidkante 54 des jeweiligen Drehmeißels 48, 50 auf die Werkstück-Drehachse B der Werkstückspindel 24 auszurichten, um Höhenfehler bzw. -abweichungen der Schneidkante 54 in Höhenrichtung z zu kompensieren. Ein solches Vorgehen ist in Fig. 6 veranschaulicht.

Im oberen Teil von Fig. 6 ist eine fehlerhafte Höhenjustage des Drehmeißels 48 gezeigt. Obgleich hier eine relative Zustellung von Werkstückspindel 24 und Drehmeißel 48 in der Längsrichtung y derart erfolgt, daß das Brillenglas L am Ende der Drehbearbeitung (links dargestellter Drehmeißel 48) eine Dicke in Längsrichtung y aufweist, die der gewünschten Dicke, d.h. der Soll-Enddicke dₛ des Brillenglases L entspricht, verbleibt ein Flächenfehler in Form eines in Fig. 6 übertrieben groß dargestellten Zapfens 58 auf der Rezeptfläche R. Dieser Flächenfehler ist darauf zurückzuführen, daß der Drehmeißel 48, genauer dessen Schneidkante 54 am Ende der Drehbearbeitung die Werkstück-Drehachse B nicht "trifft", sondern unterhalb der Werkstück-Drehachse B zum Stehen kommt (bei fehlerhafter Axialposition yₑ der Werkstückspindel 24: Werkzeug 48 ist am Ende der Drehbearbeitung zu niedrig). Ein vergleichbarer, kegelförmige Flächenfehler entsteht (nicht gezeigt), wenn am Ende der Drehbearbeitung die Schneidkante 54 des Drehmeißels 48 oberhalb der Werkstück-Drehachse B zum Stehen kommt (Werkzeug zu hoch).

Im unteren Teil von Fig. 6 ist nun eine korrekte Höhenjustage des Drehmeißels 48 bezüglich der Werkstück-Drehachse B dargestellt, bei der auf der Rezeptfläche R des Brillenglases L kein zentraler Flächenfehler verbleibt. Hierfür wird wie folgt vorgegangen: Zunächst wird - bei bekannter Lage der Schneidkante 54 des Drehmeißels 48 im Koordinatensystem der Maschine 10 und bekanntem Anstellwinkel α der Fast-Tool-Achse F1 - eine Axial-position yₖ der Werkstückspindel 24 in Längsrichtung y berechnet, bei der der Arbeitspunkt der Schneidkante 54 des Drehmeißels 48 bei Soll-Enddicke dₛ des zu bearbeitenden Brillenglases L in der die Werkstück-Drehachse B enthaltenden X-Y-Ebene zum Liegen kommt, d.h. die Werkstück-Drehachse B "trifft". Sodann wird die Werkstückspindel 24 durch lagegeregeltes axiales Verfahren bzw. Zustellen in der Y-Achse in die berechnete Axial-position yₖ gebracht, worauf ein axiales Festsetzen oder Halten der Werkstückspindel 24 in der berechneten Axialposition yₖ er-folgt. Nun kann das drehend angetriebene Brillenglas L unter lagegeregeltem Quervorschub der Werkstückspindel 24 in der X-Achse und lagegeregeltem (F1-Achse) Zustellen des Drehmeißels 48 in der Fast-Tool-Bewegungsebene, d.h. der X-F1-Ebene bearbeitet werden bis die Soll-Enddicke dₛ am bearbeiteten Brillen-glas L erzielt ist. Am Ende der Drehbearbeitung "trifft" die Schneidkante 54 des Drehmeißels 48 die Werkstück-Drehachse B jetzt automatisch.

Alternativ dazu kann, wie eingangs bereits erwähnt, so vorgegangen werden, daß die Werkstückspindel 24 in der Y-Achse nicht festgehalten wird, sondern neben der Bewegung der Fast-Tool-An-ordnung 36 in der F1-Achse auch eine geometrieerzeugende Bewegung der Werkstückspindel 24 in der Y-Achse erfolgt, genauer gesagt die Geometrieerzeugung auf die Y-Achse und die F1-Achse derart aufgeteilt wird, daß die Y-Achse für den langsameren Be-wegungsanteil zuständig ist, während die F1-Achse den schnelleren Bewegungsanteil übernimmt. Der Vorteil einer solchen Vorgehensweise ist insbesondere der, daß Fast-Tool-Anordnungen 36, 38 mit geringerem Hub und damit größerer Steifigkeit verwendet und außerdem höhere Bearbeitungsgeschwindigkeiten erzielt werden können.

Ein solches Vorgehen umfaßt dann die folgenden Schritte: Zunächst wird eine sphärische oder auch torische Flächengeometrie berechnet, die der Soll-Flächengeometrie der am Brillenglas L zu bearbeitenden Rezeptfläche R am besten entspricht ("best fit sphere" bzw. "best fit toric surface"). Ferner wird, wie bei dem vorhergehend beschriebenen Vorgehen auch, eine Axialposition yₖ der Werkstückspindel 24 berechnet, bei der der Arbeits-punkt der Schneidkante 54 des Drehmeißels 48 bei Soll-Enddicke dₛ des zu bearbeitenden Brillenglases L in der die Werkstück-Drehachse B enthaltenden X-Y-Ebene zum Liegen kommt. Sodann wird das drehend angetriebene Brillenglas L bearbeitet, und zwar unter lagegeregeltem Quervorschub der Werkstückspindel 24 in der X-Achse, lagegeregeltem Zustellen der Werkstückspindel 24 in der Y-Achse entlang einer Bewegungsbahn, die der berechneten sphärischen oder torischen "best fit" Flächengeometrie entspricht, bis die Werkstückspindel 24 die vorher berechnete Axialposition yₖ erreicht hat sowie gleichzeitigem lagegeregeten Zustellen des Drehmeißels 48 in der F1-Achse bzw. der Fast-Tool-Bewegungsebene (X-F1-Ebene) entsprechend Abweichungen der Soll-Flächengeometrie der zu bearbeitenden Rezeptfläche R von der berechneten sphärischen oder torischen "best fit" Flächengeometrie bis die Soll-Enddicke dₛ an dem bearbeiteten Brillen-glas L erzielt ist.

Wenngleich im beschriebenen Ausführungsbeispiel die X-Y-Ebene horizontal verläuft, während die X-F1-Ebene bzw. die X-F2-Ebene aus der Horizontalen um den Winkel α herausgekippt ist, können die Verhältnisse grundsätzlich auch umgekehrt getroffen werden, mit einer horizontal verlaufenden X-F1-Ebene bzw. X-F2-Ebene und einer bezüglich der Horizonalen in einem Winkel angestellten X-Y-Ebene. Ebenfalls ist eine Ausgestaltung denkbar, bei der sowohl die X-Y-Ebene als auch die X-F1-Ebene bzw. X-F2-Ebene aus der Horizontalen herausgekippt sind, dann allerdings um verschiedene Winkelbeträge.

Es wird eine Maschine zur Bearbeitung von optischen Werkstücken, insbesondere von Kunststoff-Brillengläsern offenbart, die eine Werkstückspindel hat, mittels der das Werkstück um eine Werkstück-Drehachse drehend antreibbar ist, und eine Fast-Tool-Anordnung aufweist, mittels der ein Drehmeißel in einer Fast-Tool-Bewegungsebene bewegbar ist, wobei die Werkstückspindel und die Fast-Tool-Anordnung zudem in einer Ebene, welche die Werkstück-Drehachse enthält, relativ zueinander bewegbar sind. Erfindungsgemäß ist die Fast-Tool-Bewegungsebene bezüglich der die Werkstück-Drehachse enthaltenden Ebene schräggestellt. Im Ergebnis wird eine Maschine bereitgestellt, bei der der Arbeitspunkt der Schneidkante des Drehmeißels auf besonders einfache Weise hochgenau auf die Rotationsachse der Werkstückspindel ausgerichtet werden kann.

### BEZUGSZEICHENLISTE

- 10: Maschine
- 12: Maschinengestell
- 14: Bearbeitungsbereich
- 16: Führungsschiene
- 17: Montagefläche
- 18: X-Schlitten
- 20: Führungsschiene
- 21: Montagefläche
- 22: Y-Schlitten
- 23: Montagefläche
- 24: Werkstückspindel
- 26: Elektromotor
- 28: Fräseinheit
- 30: Elektromotor
- 32: Frässpindel
- 34: Fräswerkzeug
- 36: Fast-Tool-Anordnung
- 38: Fast-Tool-Anordnung
- 40: Aktuator
- 42: Aktuator
- 44: Schlitten
- 46: Schlitten
- 48: Drehmeißel
- 50: Drehmeißel
- 52: Schneidplättchen
- 54: Schneidkante
- 56: Montagefläche
- 58: Zapfen

- α: Anstellwinkel

- dₛ: Soll-Enddicke des Werkstücks / Brillenglases
- x: Breitenrichtung
- y: Längsrichtung
- yₑ: fehlerhafte Axialposition der Werkstückspindel
- yₓ: korrekte Axialposition der Werkstückspindel
- z: Höhenrichtung

- B: Werkstück-Drehachse
- C: Fräser-Drehachse
- F1: Linearachse 1. Fast-Tool
- F2: Linearachse 2. Fast-Tool
- L: Werkstück / Brillenglas
- R: Rezeptfläche
- X: Linearachse Werkstück
- Y: Linearachse Werkstück

## Patentansprüche

1. Maschine (10) zur Bearbeitung von optischen Werkstücken (L), insbesondere von Kunststoff-Brillengläsern, mit
• einem Maschinengestell (12),
• einer Werkstückspindel (24), mittels der das Werkstück (L) um eine Werkstück-Drehachse (B) drehend antreibbar ist,
• wenigstens einer Fast-Tool-Anordnung (36), mittels der ein Drehmeißel (48) in einer Fast-Tool-Bewegungsebene (X-F1-Ebene) bewegbar ist,
**dadurch gekennzeichnet dass** die Maschine (10) weiterhin mit
• einer Fräseinheit (28), die eine Frässpindel (32) aufweist, mittels der ein Fräswerkzeug (34) um eine Fräser-Drehachse (C) drehend antreibbar ist,
• einer einen X-Schlitten (18) und einen Y-Schlitten (22) aufweisenden Kreuztischanordnung, mittels der die Werkstückspindel (24) für einen Fräsbearbeitungsvorgang relativ zur Fräseinheit (28) und für einen Drehbearbeitungsvorgang relativ zur Fast-Tool-Anordnung (36) in einer Ebene (X-Y-Ebene) bewegbar ist, welche die Werkstück-Drehachse (B) enthält,
ausgestattet ist und
• wobei die Fast-Tool-Bewegungsebene (X-F1-Ebene) bezüglich der die Werkstück-Drehachse (B) enthaltenden Ebene (X-Y-Ebene) um einen Anstellwinkel (α) schräggestellt ist.

2. Maschine (10) nach Anspruch 1, wobei der X-Schlitten (18) auf einer oberen Montagefläche (17) des Maschinengestells (12) und der Y-Schlitten (22) auf einer oberen Montagefläche (21) des X-Schlittens (18) verschiebbar gelagert ist, während die Werkstückspindel (24) an einer unteren Montagefläche (23) des Y-Schlittens (22) befestigt ist, wobei die die Werkstück-Drehachse (B) enthaltende Ebene (X-Y-Ebene) zu den Montageflächen (17, 21, 23) parallel ist.

3. Maschine (10) nach Anspruch 2, wobei die Fast-Tool-Anord nung (36) auf einer Montagefläche (56) des Maschinengestells (12) montiert ist, die bezüglich der Montageflächen (17, 21, 23) für die Kreuztischanordnung bzw. die Werkstückspindel (24 um den Anstellwinkel (α) verkippt ist, so dass die Fast-Tool-Bewegungsebene (X-F1-Ebene) bezüglich der die Werkstück-Drehachse (B) enthaltenden Bewegungsebene (X-Y-Ebene) der Werkstückspindel (24) schräggestellt ist.

4. Maschine (10) nach einem der vorhergehenden Ansprüche, wobei die Fast-Tool-Bewegungsebene (X-F1-Ebene) und die die Werkstück-Drehachse (B) enthaltende Ebene (X-Y-Ebene) einen Anstellwinkel (α) einschließen, der zwischen 2° und 10° beträgt

5. Maschine (10) nach Anspruch 4, wobei der Anstellwinkel (α) 5° beträgt.

6. Maschine (10) nach einem der vorhergehenden Ansprüche, wobei das Maschinengestell (12) einen Bearbeitungsbereich (14) begrenzt, auf dessen einer Seite die Kreuztischanordnung vorge-sehen ist, während auf der anderen Seite des Bearbeitungsbereichs (14) die Fräseinheit (28) und die Fast-Tool-Anordnung (36) hintereinander angeordnet sind.

7. Maschine (10) nach einem der vorhergehenden Ansprüche, wobei zwei Fast-Tool-Anordnungen (36, 38) in Parallelanordnung vorgesehen sind, die gegenläufig ansteuerbar sind.

8. Maschine (10) nach einem der vorhergehenden Ansprüche, wobei eine durch die Fräseinheit (28) vorbearbeitete Rezeptfläche (R) eines Brillenglases (L) mittels der Fast-Tool-Anordnung(en) (36, 38) drehend nachbearbeitbar ist.

## Claims

1. Machine (10) for machining optical workpieces (L), in particular plastic spectacle lenses, comprising
a machine frame (12),
a workpiece spindle (24), by means of which the workpiece (L) can be driven in rotation about a workpiece rotation axis (B),
at least one fast tool arrangement (36), by means of which a turning tool (48) can be moved in a fast tool movement plane (X-F1 plane),
**characterized in that** the machine (10) is further equipped with
a cutter unit (28) that has a cutter spindle (32), by means of which a cutter tool (34) can be driven in rotation about a cutter rotation axis (C),
a cross table arrangement having an X-slide (18) and a Y-slide (22), by means of which said workpiece spindle (24) can be moved in a plane (X-Y plane) containing the workpiece rotation axis (B) relative to said cutter unit (28) for a cutting operation and relative to said fast tool arrangement (36) for a turning operation, and
wherein the fast tool movement plane (X-F1 plane) is positioned obliquely by a work angle (α) with respect to the plane (X-Y plane) containing the workpiece rotation axis (B).

2. Machine (10) according to claim 1, wherein said X-slide (18) is displaceably mounted on an upper mounting surface (17) of said machine frame (12) and said Y-slide (22) is displaceably mounted on an upper mounting surface (21) of said X-slide (18), whereas said workpiece spindle (24) is fixed to a lower mounting surface (23) of said Y-slide (22), wherein the plane (X-Y plane) containing the workpiece rotation axis (B) is parallel to said mounting surfaces (17, 21, 23).

3. Machine (10) according to claim 2, wherein said fast tool arrangement (36) is mounted on a mounting surface (56) of said machine frame (12) which is tilted by the work angle (α) with respect to said mounting surfaces (17, 21, 23) for said cross table arrangement and for said workpiece spindle (24), respectively, so that the fast tool movement plane (X-F1 plane) is positioned obliquely with respect to the movement plane (X-Y plane) of said workpiece spindle (24) which contains the workpiece rotation axis (B).

4. Machine (10) according to one of the preceding claims, wherein the fast tool movement plane (X-F1 plane) and the plane (X-Y plane) containing the workpiece rotation axis (B) enclose a work angle (α) of between 2° and 10°.

5. Machine (10) according to claim 4, wherein the work angle (α) amounts to 5°.

6. Machine (10) according to one of the preceding claims, wherein said machine frame (12) delimits a machining area (14), said cross table arrangement being provided on one side of said machining area (14), whereas said cutter unit (28) and said fast tool arrangement (36) being arranged one behind the other on the other side of said machining area (14).

7. Machine (10) according to one of the preceding claims, wherein two fast tool arrangements (36, 38) are provided in parallel arrangement, which can be actuated oppositely.

8. Machine (10) according to one of the preceding claims, wherein a prescription surface (R) of a spectacle lens (L), which has been premachined by said cutter unit (28), can subsequently be lathe machined by said fast tool arrangement(s) (36, 38).

## Revendications

1. Machine (10) pour l'usinage de pièces à oeuvrer optiques (L), à savoir de verres de lunettes en matière plastique, comprenant
- un châssis de machine (12),
- une broche pour pièces à oeuvrer (24), au moyen de laquelle la pièce à oeuvrer (L) peut être entraînée en rotation autour d'un axe de rotation de pièce (B),
- au moins un agencement à outil rapide (36), au moyen duquel un burin rotatif (48) est déplaçable dans un plan de déplacement d'outil rapide (plan X-F1),
**caractérisée en ce que** la machine (10) est en outre équipée
- d'une unité de fraisage (28), qui comprend une broche de fraisage (32), au moyen de laquelle un outil de fraisage (34) peut être entraîné en rotation autour d'un axe de rotation de fraisage (C),
- d'un agencement à table croisée, qui comprend un chariot X (18) et un chariot Y (22), agencement au moyen duquel la broche pour pièces à oeuvrer (24) est déplaçable pour un processus d'usinage par fraisage par rapport à l'unité de fraisage (28) et pour un processus d'usinage rotatif par rapport à l'agencement à outil rapide (36), dans un plan (plan X-Y) qui contient l'axe de rotation de la pièce à oeuvrer (B), et
- dans laquelle le plan de déplacement d'outil rapide (plan X-F1) est disposé en oblique sous un angle d'approche (α) par rapport au plan (plan X-Y) qui contient l'axe de rotation de la pièce à oeuvrer (B).

2. Machine (10) selon la revendication 1, dans laquelle le chariot X (18) est monté déplaçable sur une surface de montage supérieure (17) du châssis de machine (12) et le chariot Y (22) est monté déplaçable sur une surface de montage supérieure (21) du chariot X (18), tandis que la broche pour pièces à oeuvrer (24) est fixée sur une surface de montage inférieure (23) du chariot Y (22), et le plan (plan X-Y) qui contient l'axe de rotation de la pièce à oeuvrer (B) est parallèle aux surfaces de montage (17, 21, 23).

3. Machine (10) selon la revendication 2, dans laquelle l'agencement à outil rapide (36) est monté sur une surface de montage (56) du châssis de machine (12), surface qui est basculée par rapport aux surfaces de montage (17, 21, 23) pour l'agencement à table croisée ou respectivement pour la broche pour pièces à oeuvrer (24) sous l'angle d'approche (α), de sorte que le plan de déplacement d'outil rapide (plan X-F1) est disposé en oblique par rapport au plan de déplacement (plan X-Y), de la broche pour pièces à oeuvrer (24), qui contient l'axe de rotation de la pièce à oeuvrer (B).

4. Machine (10) selon l'une des revendications précédentes, dans laquelle le plan de déplacement d'outil rapide (plan X-F1) et le plan (X-Y) qui contient l'axe de rotation de la pièce à oeuvrer (B) définissent un angle d'approche (α) qui s'élève entre 2° et 10°.

5. Machine (10) selon la revendication 4, dans lequel l'angle d'approche (α) s'élève à 5°.

6. Machine (10) selon l'une des revendications précédentes, dans laquelle le châssis de machine (12) délimite une zone d'usinage (14) sur un côté de laquelle est prévu l'agencement à table croisée, tandis que sur l'autre côté de la zone d'usinage (14) sont agencés l'unité de fraisage (28) et l'agencement à outil rapide (36) l'un derrière l'autre.

7. Machine (10) selon l'une des revendications précédentes, dans laquelle il est prévu deux agencements à outil rapide (36, 38) en disposition parallèle, qui peuvent être pilotés en sens opposé.

8. Machine (10) selon l'une des revendications précédentes, dans laquelle une surface définie par ordonnance (R) d'un verre de lunettes (L), préalablement usinée par l'unité de fraisage (28), peut être usinée en reprise en rotation au moyen de l'agencement ou des agencements à outil rapide (36, 38).
